(19) Europäisches Patentamt
European Patent Office
Office européen des brevets

(11) **EP 2 333 388 A2**

(12) **EUROPÄISCHE PATENTANMELDUNG**

(43) Veröffentlichungstag:
**15.06.2011 Patentblatt 2011/24**

(51) Int Cl.:
***F16K 31/06*** *(2006.01)*

(21) Anmeldenummer: **10174809.3**

(22) Anmeldetag: **01.09.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **08.12.2009   DE 102009047623**

(71) Anmelder: **Robert Bosch GmbH**
**70442 Stuttgart (DE)**

(72) Erfinder: **Kube, Dirk**
**5000 AM Tilburg (NL)**

(54) **Elektromagnetisch betätigtes Schieberventil mit integrierter Sicherheitsfunktion**

(57) Es wird ein Schieberventil (10) zur hydraulischen Steuerung von insbesondere Automatikgetrieben von Kraftfahrzeugen vorgeschlagen mit einem in einem Ventilgehäuse (2) verstellbar geführten Ventilschieber (1), welcher eine Reihe von hydraulischen Anschlüssen und Wirkflächen aufweist, die mit Arbeitsdruck oder Steuerdruck beaufschlagbar sind, mit einer Rückstellfeder (3) und mit einer elektromagnetischen Betätigungseinrichtung (4), die eine Magnetkraft $F_M$ in einer ersten Verstellrichtung auf den Ventilschieber (1) bei Betätigung erzeugt, wobei neben mindestens einem mit Arbeitsdruck beaufschlagbaren Systemanschluss (5) ein zusätzlicher hydraulischer Anschluss (6) am Ventilgehäuse (2) mit einer zusätzlichen hydraulischen Wirkfläche (7) am Ventilschieber (1) vorgesehen ist, mit welchem eine Zusatzverstellkraft $F_z$ am Ventilschieber (1) erzeugbar ist, die entgegen der Verstellrichtung der Magnetkraft $F_M$ der elektromagnetischen Betätigungseinrichtung (4) wirkt, um eine Ausfall-Notfunktion einer hydraulischen Steuerung zu realisieren.

FIG. 1

EP 2 333 388 A2

**Beschreibung**

Stand der Technik

Die Erfindung betrifft ein elektromagnetisch betätigtes Schieberventil zur Hydrauliksteuerung in einem Automatikgetriebe eines Kraftfahrzeugs nach dem Oberbegriff des Anspruchs 1.

Elektromagnetisch betätigbare Schieberventile dienen im Stand der Technik zur Realisierung einer Hydrauliksteuerung von insbesondere Automatikgetrieben von Kraftfahrzeugen. Dabei sind direktgesteuerte Ausführungen bekannt, bei denen ein Verstärkungsschieber nicht erforderlich ist. Diese arbeiten sehr genau und leckagearm. Durch eine entsprechende Flächenwahl ist es möglich, dass das Ventil in die Endstellung geschaltet werden kann, auch wenn die elektromagnetische Betätigungseinrichtung ausgefallen ist. Bekannt ist ferner, bei direktgesteuerten hydraulischen Getriebesteuerungen Schaltventile zwischen den Ventilen der hydraulischen Last anzuordnen, um bestimmte Schaltzustände unterbinden zu können. Beispielsweise muss garantiert werden, dass das Getriebe blockiert oder dass der korrekte Gang eingelegt ist, oder dass gleichzeitig zwei Kupplungen betätigt werden.

Offenbarung der Erfindung

Das der Erfindung zugrundeliegende Problem wird durch ein elektromagnetisch betätigtes Schieberventil mit den Merkmalen nach Anspruch 1 gelöst. Vorteilhafte Ausgestaltungen und Weiterbildungen der Erfindung sind Gegenstand der abhängigen Ansprüche.

Das Schieberventil nach der Erfindung hat eine integrierte Sicherheitsfunktion, die einen fortgesetzten Betrieb eines Automatikgetriebes selbst bei Ausfall einzelner Bestandteile davon ermöglicht. Ein Betriebszustand und der dazu notwendige Betriebsdruck der Hydrauliksteuerung werden erfindungsgemäß selbst dann bereitgestellt, wenn die Magnetkraft der elektromagnetischen Betätigungseinrichtung wirkt. Hierzu ist erfindungsgemäß ein zusätzlicher hydraulischer Anschluss am Ventilgehäuse des Schieberventils vorgesehen, der mit einer zusätzlichen hydraulischen Wirkfläche am Ventilschieber derart zusammenwirkt, dass im Notfall eine zusätzliche Verstellkraft entgegen der Magnetkraft am Ventilschieber erzeugt wird. Auf diese Weise kann bei dem erfindungsgemäßen Schieberventil verhindert werden, dass - selbst bei maximaler Magnetkraft durch die elektromagnetische Betätigungseinrichtung - der Ventilschieber in Wirkrichtung des Magneten verschoben wird. Dadurch weist das Schieberventil nach der Erfindung eine integrierte Sicherheitsfunktion auf, die eine Ausfall-Notfunktion (Fail-Safe-Funktion) und ein Unterbinden von unerwünschten Zuständen und Betriebsbedingungen bei hydraulisch gesteuerten Automatikgetrieben beispielsweise von Kraftfahrzeugen mit relativ einfachen Mitteln erlaubt.

Nach einer vorteilhaften Ausgestaltung der Erfindung weist die zusätzliche hydraulische Wirkfläche eine Größe auf, welche eine Zusatzverstellkraft am Ventilschieber entgegen der Verstellkraft der elektromagnetischen Betätigungseinrichtung erzeugt, die größer ist als eine maximale Magnetkraft der elektromagnetischen Betätigungseinrichtung. In einem Störfall beispielsweise wird so sichergestellt, dass der Ventilschieber des Schieberventils auch entgegen der Magnetkraft der elektromagnetischen Betätigungsvorrichtung in eine vorbestimmte Position verstellt wird, die einen weiteren Betrieb oder einen sogenannten Notbetrieb eines Automatikgetriebes erlaubt. Die zusätzliche Wirkfläche am Ventilschieber funktioniert dabei als eine Ein/Aus-Fühlfläche, die einen Ausfall-Notbetrieb erlaubt. Auf diese Weise sind keine zusätzlichen Ventile zur Realisierung eines sogenannten Ausfall-Notkonzepts in der Hydraulikschaltung zur Steuerung eines Automatikgetriebes beispielsweise erforderlich.

Nach einer weiteren vorteilhaften Ausgestaltung des erfindungsgemäßen Schieberventils ist die zusätzliche hydraulische Wirkfläche am Ventilschieber so dimensioniert, dass bei einem minimal möglichen Steuerdruck die Zusatzverstellkraft $F_Z$ größer ist als die resultierenden Kräfte, welche in Richtung der Magnetkraft $F_M$ der elektromagnetischen Betätigungseinrichtung wirken. Die Bemessung der zusätzlichen hydraulischen Wirkfläche kann dabei insbesondere über unterschiedliche Durchmesserbereiche am Ventilschieber des Schieberventils erfolgen. Durch unterschiedliche Durchmesser entstehen automatisch unterschiedlich große Wirkflächen, die für eine gezielte Einstellung der gewünschten und erforderlichen hydraulischen Kräfte bemessen werden können.

Nach einer weiteren vorteilhaften Ausgestaltung der Erfindung handelt es sich bei dem Schieberventil um ein Steuerventil einer direktgesteuerten hydraulischen Getriebesteuerung eines Automatikgetriebes eines Kraftfahrzeugs. Bei direktgesteuerten Hydraulikschaltungen für die Steuerung von Automatikgetrieben entfällt der bei vorgesteuerten Ventilen erforderliche Verstärkungsschieber. Die Steuerung ist damit wesentlich genauer und kann mit weniger Leckage ausgeführt werden. Dennoch bietet das erfindungsgemäße Schieberventil eine integrierte Sicherheitsfunktion, die auch bei einem Ausfall einen weiteren Betrieb ermöglicht und die verschiedene Sicherungsfunktionen, wie ein Verhindern von gleichzeitigem Schalten mehrerer Kupplungen, ausführen lässt.

Nach einer weiteren vorteilhaften Ausgestaltung der Erfindung bilden die mit einem Arbeitsdruck beaufschlagte hydraulische Wirkfläche eines Systemanschlusses und die zusätzliche hydraulische Wirkfläche des Zusatzanschlusses eine Differenzfläche, wobei die Differenzfläche so bemessen ist, dass die Zusatzverstellkraft $F_Z$ größer ist als eine resultierende Kraft, die in Richtung der Magnetkraft $F_M$ wirkt. Durch geschicktes Auswählen der Flächenverhältnisse und Bestimmen einer erforderlichen Differenzfläche zwischen einerseits der Wirkfläche am Systemanschluss und andererseits der Notausfallswirkfläche kann die jeweils im Anwendungsfall erforderliche Zusatzverstellkraft realisiert werden. Die erforderliche Kraft für beispielsweise eine Ausfall-Notfunktion am Ventilschieber lässt sich mit der Erfindung auf Grundlage von unterschiedlichen Flächen und Flächenverhältnissen berechnen.

Nach einer diesbezüglichen vorteilhaften weiteren Ausgestaltung der Erfindung wird die Zusatzverstellkraft $F_z$ an der zusätzlichen Wirkfläche am Ventilschieber durch eine Reihe von unterschiedlichen Durchmesserbereichen D1-D5 am Ventilschieber realisiert.

Nach einer weiteren vorteilhaften Ausgestaltung der Erfindung ist eine vordefinierte Endstellung für den Ventilschieber derart vorgesehen, dass der Ventilschieber in dieser Endstellung verstellt wird, um einen Notbetrieb bei Ausfall von Bestandteilen der Hydrauliksteuerung zu gewährleisten.

Die Erfindung wird im Folgenden mehr im Detail unter Bezugnahme auf mehrere Ausführungsbeispiele beschrieben werden. Die Ausführungsbeispiele sind in der Zeichnung dargestellt.

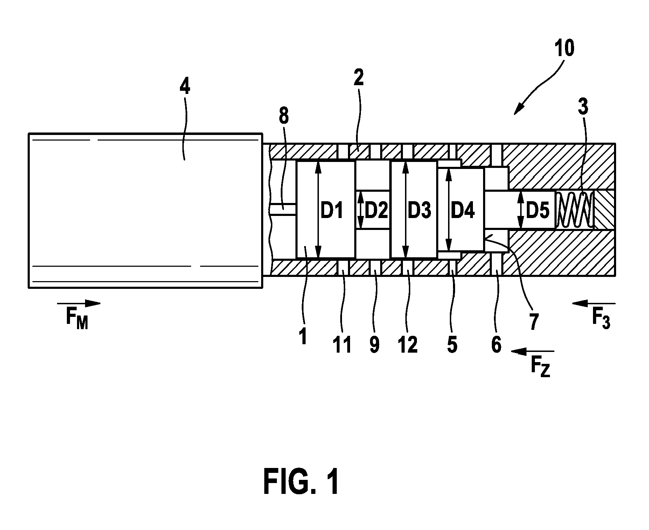

In dieser zeigt die einzige Figur 1 eine schematische Ansicht eines Ausführungsbeispiels eines erfindungsgemäßen Schieberventils mit integrierter Sicherheitsfunktion.

In Fig. 1 ist eine schematische Ansicht eines Ausführungsbeispiels eines erfindungsgemäßen Schieberventils gezeigt, bei welchem eine integrierte Sicherheitsfunktion verwirklicht ist, wie sie im Folgenden mehr im Detail beschrieben wird. Das erfindungsgemäße Schieberventil 10 weist wie bei bisher bekannten Schieberventilen einen Ventilschieber 1 auf, welcher im Inneren eines Ventilgehäuses 2 verschiebbar gelagert ist. Der Ventilschieber 1 ist einerseits über eine elektromagnetische Betätigungseinrichtung 4 verstellbar, welche den Ventilschieber 1 entgegen einer gegenüberliegenden Rückstellfeder 3 verstellt (nach rechts in der Fig. 1). Zum anderen ist eine Reihe von hydraulischen Anschlüssen an dem Gehäuse 2 des Schieberventils 10 vorgesehen, über welche ein Arbeitsdruck oder ein hydraulischer Steuerdruck auf den Ventilschieber 1 und verschiedene hydraulische Wirkflächen des Ventilschiebers 1 aufgebracht werden kann.

Der Ventilschieber 1 ist bei dem Ausführungsbeispiel der Fig. 1 über einen Magnetstift 8 mit der elektromagnetischen Betätigungseinrichtung 4 verbunden. Bei Aktivierung der elektromagnetischen Betätigungseinrichtung 4 wird eine Magnetkraft $F_M$ auf den Ventilschieber 1 aufgebracht, so dass er in diese Richtung, wie sie mit den Pfeilen in Fig. 1 gekennzeichnet ist, verstellt wird. Bei Abschalten der elektromagnetischen Betätigungseinrichtung 4 wird der Ventilschieber durch die Rückstellfeder 3 und deren Rückstellkraft $F_z$ zurückstellt. Zur Realisierung von verschiedenen Stellungen des Schieberventils 10 und damit verschiedenen Funktionen innerhalb einer Hydrauliksteuerung eines direktgesteuerten automatischen Getriebes eines Kraftfahrzeugs sind am Ventilschieber 1 verschiedene hydraulische Wirkflächen vorgesehen, die mit hydraulischen Anschlüssen und einer nicht im Detail dargestellten Hydrauliksteuerung zusammenwirken. Im Unterschied zu herkömmlichen Schieberventilen nach dem Stand der Technik sind erfindungsgemäß eine zusätzliche hydraulische Wirkfläche 7 und ein zusätzlicher hydraulischer Anschluss 6 vorgesehen, die eine Realisierung einer Ausfall-Notfunktion bzw. anderer Sicherheitsfunktionen ermöglichen.

Die weitere hydraulische Wirkfläche 7 ist bei dem Ausführungsbeispiel nach Fig. 1 durch eine zusätzliche Durchmesserreduzierung (Durchmesser D5 in Fig. 1) seitens der Rückstellfeder 3 am Ventilschieber 1 realisiert. Die zusätzliche hydraulische Wirkfläche 7 dient erfindungsgemäß für eine integrierte Ausfall-Notfunktion, so dass auch bei Ausfall eines Teils der Hydrauliksteuerung oder eines elektronischen Steuermoduls der Hydrauliksteuerung ein Betrieb des zu steuernden Automatikgetriebes eines Kraftfahrzeugs weiter gewährleistet ist. Die zusätzliche hydraulische Wirkfläche 7 (auch bezeichnet als On/Off-Fühlfläche) kann über den zusätzlichen hydraulischen Anschluss 6 derart mit Hydrauliköl beaufschlagt werden, dass eine Zusatzverstellkraft $F_z$ am Ventilschieber erzeugt wird, die entgegen der normalen Wirkrichtung der elektromagnetischen Betätigungseinrichtung (vgl. Pfeil der Magnetkraft $F_M$ in den Figuren) wirkt. Dazu ist die Größe der zusätzlichen hydraulischen Wirkfläche 7 derart bemessen, dass der erzeugbare hydraulische Druck im Falle eines Ausfalls des Systems ausreicht, um eine Zusatzverstellkraft $F_z$ zu erzeugen, die größer ist als die Summe der Kräfte, welche in Wirkrichtung der elektromagnetischen Betätigungseinrichtung 4 gegeben sind.

Auf diese Weise kann mit der integrierten erfindungsgemäßen Sicherheitsfunktion bei einem Schieberventil 10 eine sogenannte Fail-Safe-Funktionalität bzw. deutsch Ausfall-Sicherheitsfunktionalität mit denkbar einfachen Mitteln realisiert werden, welche sicherstellt, dass zum Beispiel in einem Störfall der Ventilschieber auch gegen die Magnetkraft der elektromagnetischen Betätigungseinrichtung in eine vorbestimmte Position verstellt wird, welche einen weiteren Betrieb des direktgesteuerten Automatikgetriebes und damit eines damit versehenen Kraftfahrzeugs erlaubt. Um dies zu erreichen, ist der Ventilschieber 1 mit unterschiedlichen Durchmesserbereichen D1 bis D5 versehen. Die unterschiedlichen Durchmesserbereiche D1 bis D5 sind so gewählt, dass die Wirkflächen an den mit Hydraulikdruck beaufschlagten Bereichen ein bestimmtes Verhältnis ergeben. Durch eine geeignete Wahl der Durchmesser D4 und D5 wird die zusätzliche hydraulische Wirkfläche 7 so erzeugt, dass ein Minimalsteuerdruck im System ausreicht, um eine genügend hohe Verstellkraft $F_z$ entgegen der Magnetkraft $F_M$ zu erhalten.

An den Systemanschlüssen 5 und 9, welche auch als Arbeitsanschlüsse bezeichnet werden, liegt im normalen Betrieb ein Arbeitsdruck an, mit welchem der Ventilschieber 1 durch Ansteuern jeweils der Anschlüsse 5 oder 9 verstellt werden kann. Die weiteren hydraulischen Anschlüsse 11 und 12 sind jeweils Anschlüsse mit einem ersten Druckniveau (11) und einem zweiten Druckniveau (12). Die Durchmesserbereiche D1 und D3 des Ventilschiebers 1 sind bei diesem Ausführungsbeispiel entsprechend der größten Innenabmessung des Ventilgehäuses 2. Die Durchmesser D2 und D5 sind demgegenüber um in etwa 50 % reduziert, so dass relativ große hydraulische Wirkflächen entstehen. Der Durchmesserbereich D4 ist geringfügig kleiner als die Durchmesserbereiche D1 und D3.

Die Grundfunktion des Schieberventils wird durch ein Kräftegleichgewicht zwischen der Magnetkraft $F_M$ und der demgegenüber in entgegengesetzter Richtung wirkenden Federkraft $F_3$ sowie einer Kraft aufgrund des hydraulischen Arbeitsdrucks $F_A$ aufgestellt, welche durch eine Druckbeaufschlagung an dem Arbeitsanschluss bzw. Systemanschluss 5 oder 9 erzeugt wird. Es ergibt sich damit ein Kräftegleichgewicht mit folgender Gleichung:

$$F_M - F_A - F_3 = 0.$$

Die erfindungsgemäße Zusatzfunktionalität mit integrierter Sicherheitsfunktion ergibt sich bei dem in Fig. 1 dargestellten Ausführungsbeispiel durch die unterschiedlichen Durchmesser D4 und D5 und ein Beaufschlagen des Anschlusses 6 mit einem Steuerdruck. Aufgrund der unterschiedlichen Durchmesser D4 und D5 ergibt sich eine Differenzfläche. Diese Differenzfläche ist nach der Erfindung so ausgelegt, dass die resultierende Kraft aufgrund des Steuerdrucks am zusätzlichen hydraulischen Anschluss 6, welche entgegen der Magnetkraft $F_M$ wirkt, größer ist als die Magnetkraft. Dies kann mit folgender Formel berechnet werden:

$$D5 < \sqrt{D4^2 - \frac{4 * F_M}{\pi * P_S}}$$

wobei $F_M$ die Magnetkraft ist und $P_S$ der Steuerdruck am zusätzlichen hydraulischen Anschluss 6 ist. Bei einer Auslegung der beiden Flächen und damit der Wirkflächen und damit der Durchmesserbereiche D4 und D5 wird beispielsweise D4 = 9 mm gewählt. Wenn weiterhin beispielhaft die Magnetkraft $F_M$ = 18 Nm und der Steuerdruck $E_S$ = 20 bar beträgt, muss der Durchmesser des Durchmesserbereichs D5 des Ventilschiebers 1 kleiner als 8,39 mm sein. Dies ergibt sich aus der Berechnung mit obiger Formel durch:

$$D5 < \sqrt{0{,}009^2 \, m^2 - \frac{4 * 18 \, N}{\pi * 20 * 10^5 \, N/m^2}}$$

Bei einer derartigen beispielhaften und vorteilhaften Auslegung des Ventilschiebers 1 und seiner verschiedenen Durchmesserbereiche ergibt sich für das beschriebene Ausführungsbeispiel eines Schieberventils 10 das folgende Kräftegleichgewicht:

$$F_M - F_A - F_3 - F_S \leq 0$$

wobei $F_S$ die Kraft durch den Steuerdruck am Zusatzanschluss 6 ist und $F_A$ der Arbeitsdruck des hydraulischen Systems an einem der Arbeitsanschlüsse 5, 9 ist. Mit der erfindungsgemäß so realisierten Ein/Aus-Funktionalität, die direkt in dem Ventil integriert ist, kann mit einfacheren Mitteln als bisher im Stand der Technik ein Sicherheitskonzept realisiert werden, das auch bei einem Ausfall oder bei einem Notbetrieb eine weitere Steuerung des direktgesteuerten hydraulischen Automatikgetriebes ermöglicht, so dass ein Kraftfahrzeug weiter betrieben werden kann. Durch die Integration der Funktionalität in das Schieberventil wird ferner Gewicht gespart, der erforderliche Bauraum reduziert, und die Leckage reduziert.

**Patentansprüche**

1. Schieberventil (10) zur hydraulischen Steuerung von insbesondere einem Automatikgetriebe eines Kraftfahrzeugs mit einem in einem Ventilgehäuse (2) verstellbar geführten Ventilschieber (1), welcher eine Reihe von hydraulischen Wirkflächen aufweist, die mit Arbeitsdruck oder Steuerdruck beaufschlagbar sind, mit einer Rückstellfeder (3) und mit einer elektromagnetischen Betätigungseinrichtung (4), die eine Magnetkraft $F_M$ in einer ersten Verstellrichtung auf den Ventilschieber (1) bei Betätigung erzeugt, **dadurch gekennzeichnet, dass** neben mindestens einem mit Arbeitsdruck beaufschlagbaren Systemanschluss (5) ein zusätzlicher hydraulischer Anschluss (6) am Ventilgehäuse (2) mit einer zusätzlichen hydraulischen Wirkfläche (7) am Ventilschieber (1) vorgesehen ist, mit welchem eine Zusatzverstellkraft $F_Z$ am Ventilschieber (1) erzeugbar ist, die entgegen der Verstellrichtung der Magnetkraft $F_M$ der elektromagnetischen Betätigungseinrichtung (4) wirkt, um eine Ausfall-Notfunktion einer hydraulischen Steuerung zu realisieren.

2. Schieberventil (10) nach Anspruch 1, **dadurch gekennzeichnet, dass** die zusätzliche hydraulische Wirkfläche (7) eine Größe aufweist, welche eine Zusatzverstellkraft $F_z$ am Ventilschieber (1) entgegen der Magnetkraft $F_M$ der elektromagnetischen Betätigungseinrichtung (4) erzeugt, welche größer ist als eine maximale Magnetkraft $F_M$ der Betätigungseinrichtung (4).

3. Schieberventil (10) nach Anspruch 1 oder 2, **dadurch gekennzeichnet, dass** die zusätzliche hydraulische Wirkfläche so dimensioniert ist, dass bei einem minimal möglichen Steuerdruck eines hydraulischen Steuerungssystems die Zusatzverstellkraft $F_z$ größer ist als die resultierenden Kräfte am Ventilschieber (1), welche in Richtung der Magnetkraft $F_M$ der elektromagnetischen Betätigungseinrichtung (4) wirken.

4. Schieberventil (10) nach einem der vorangegangenen Ansprüche, **dadurch gekennzeichnet, dass** es ein Steuerventil einer direktgesteuerten hydraulischen Getriebesteuerung eines Automatikgetriebes eines Kraftfahrzeugs ist.

5. Schieberventil (10) nach einem der vorangegangenen Ansprüche, **dadurch gekennzeichnet, dass** die hydraulische Wirkfläche des mit Arbeitsdruck beaufschlagten Systemanschlusses (5) und die zusätzliche hydraulische Wirkfläche (7) des hydraulischen Anschlusses (6) eine Differenzfläche bilden, welche so bemessen ist, dass die Zusatzverstellkraft $F_z$ größer ist als eine resultierende Kraft, die in Richtung der Magnetkraft $F_M$ auf den Ventilschieber (1) wirkt.

6. Schieberventil (10) nach einem der vorangegangenen Ansprüche, **dadurch gekennzeichnet, dass** die Erzeugung einer Zusatzverstellkraft $F_z$ zur Realisierung einer Sicherheitsfunktion in einem hydraulischen Steuerungssystem durch verschiedene Durchmesserbereiche (D1-D5) am Ventilschieber (1) verwirklicht ist.

7. Schieberventil (10) nach einem der vorangegangenen Ansprüche, **dadurch gekennzeichnet, dass** die zusätzliche hydraulische Wirkfläche (7) derart bemessen ist, dass eine vordefinierte Endstellung des Ventilschiebers (1) in einem Notbetrieb bei einem Ausfall eines Getriebesteuergeräts oder einer elektronischen Steuerung eingestellt wird.

FIG. 1